# EUROPÄISCHE PATENTANMELDUNG

(11) **EP 4 464 579 A1**
(43) Veröffentlichungstag der Anmeldung: **20.11.2024**
(21) Anmeldenummer: 23174048.1
(22) Anmeldetag: 17.05.2023
(51) Int. Cl.: B62J 45/416, B62J 45/422, B62J 45/20, A63B 27/00, A63B 69/16

(54) **FAHRRADCOMPUTER, TRAININGSSYSTEM UMFASSEND EIN FAHRRAD UND EINEN FAHRRADCOMPUTER UND TRAININGSVERFAHREN**

(71) Anmelder: Vorn AG, 8842 Wollerau (CH)
(72) Erfinder: Schwitter, Laurin, 8052 Zürich (CH); Langenegger, Jovin, 8048 Zürich (CH)

(57) **Zusammenfassung**

Die Erfindung betrifft einen Fahrradcomputer (1) zur Befestigung an einem Fahrrad (2), der dazu ausgelegt ist die Leistung eines Fahrradfahrers (3) zu überwachen und ein Signal zur Leistung an den Fahrradfahrer (3) auszugeben. Die Erfindung betrifft auch ein Trainingssystem umfassend ein Fahrrad (2) und einen solchen Fahrradcomputer (1) und ein Trainingsverfahren.

## Beschreibung

Die Erfindung betrifft einen Fahrradcomputer zur Befestigung an einem Fahrrad, der dazu ausgelegt ist die Leistung eines Fahrradfahrers zu überwachen und ein Signal zur Leistung an den Fahrradfahrer auszugeben, ein Trainingssystem umfassend ein Fahrrad und einen Fahrradcomputer und ein Trainingsverfahren.

Fahrradcomputer werden benutzt, um die Leistung eines Fahrradfahrers beim Fahrradfahren zu überwachen, aufzuzeichnen und zu analysieren. Dazu werden spezifische Werte zur Leistung des Fahrradfahrers, also Leistungswerte, vom Fahrradcomputer während des Fahrradfahrens ermittelt und abgespeichert. Ein solcher Wert kann beispielsweise die Fahrgeschwindigkeit, der Puls des Fahrradfahrers, die Ortshöhe, der Umgebungsluftdruck, die Kadenz usw. sein. Solche Werte werden mit dazu geeigneten Sensoren ermittelt. Die Sensoren können im Fahrradcomputer integriert sein oder alleinstehend und mit dem Fahrradcomputer kommunikativ verbunden sein. Vom Fahrradcomputer ermittelte Werte zur Leistung eines Fahrradfahrers bilden die Basis, um die Leistung des Fahrradfahrers gezielt zu verbessern.

Es gibt Raum für die Bereitstellung eines Fahrradcomputers, der eine effiziente und verlässliche Ermittlung von Werten zur Leistung eines Fahrradfahrers und deren Ausgabe an den Fahrradfahrer während des Fahrradfahrens ermöglicht.

Ein solcher Fahrradcomputer wird durch den Fahrradcomputer gemäss den Merkmalen des Anspruchs 1 bereitgestellt.

Es gibt auch Raum für die Bereitstellung eines Trainingssystems, das einem Fahrradfahrer ermöglicht seine Leistung gezielt zu verbessern.

Ein solches Trainingssystem wird durch das Trainingssystem gemäss den Merkmalen des Anspruchs 12 bereitgestellt.

Es gibt auch Raum für die Bereitstellung eines Trainingsverfahrens, das einem Fahrradfahrer ermöglicht seine Leistung gezielt zu verbessern.

Ein solches Trainingsverfahren wird durch das Trainingsverfahren gemäss den Merkmalen des Anspruchs 13 bereitgestellt.

Die Erfindung betrifft einen Fahrradcomputer zur Befestigung an einem Fahrrad, der dazu ausgelegt ist die Leistung eines Fahrradfahrers zu überwachen und ein Signal zur Leistung an den Fahrradfahrer auszugeben.

Die Leistung kann beispielsweise die Haltung/Position des Fahrradfahrers beim Fahrradfahren, die Fahrgeschwindigkeit, den Puls des Fahrradfahrers, die Ortshöhe, den Umgebungsluftdruck, die Kadenz usw. betreffen. Das Signal kann ein optisches Signal, beispielsweise ein Lichtpuls, und/oder ein akustisches Signal, beispielsweise ein Ton, sein.

Der Fahrradcomputer hat eine Befestigungsvorrichtung, eine Computereinheit, ein Sensormodul mit einer Sensorfläche, das dazu konfiguriert ist, Abstandsinformation zu Abständen innerhalb eines Sensorsichtfelds basierend auf dem Prinzip der Lichtlaufzeitmessung zu ermitteln, eine Signalgebereinheit und einen Datenspeicher.

Der Fahrradcomputer kann ein Gehäuse umfassen und die Befestigungsvorrichtung kann Teil des Gehäuses sein oder am Gehäuse angeordnet sein. Die Befestigungsvorrichtung kann eine Befestigungsfläche umfassen, die dazu ausgestaltet ist, um von einer Fahrradcomputeraufnahmevorrichtung des Fahrrads festgehalten zu werden. Die Befestigungsvorrichtung kann so ausgestaltet sein, dass der Fahrradcomputer durch ein Einschieben in die Fahrradcomputeraufnahmevorrichtung daran befestigbar ist. Die Befestigungsvorrichtung kann Einrastelemente aufweisen, sodass der Fahrradcomputer in der Fahrradcomputeraufnahmevorrichtung einrastbar und so daran befestigbar ist. Die Befestigungsvorrichtung kann Formschlusselemente aufweisen, die mit Formschlusselementen der Fahrradcomputeraufnahmevorrichtung eine formschlüssige Befestigung des Fahrradcomputers ermöglichen.

Das Sensormodul weist eine Lichtquelle auf, welche Messstrahlung aussendet. Das Aussenden erfolgt gepulst und kontrolliert. Trifft die Messstrahlung auf ein Oberkörperabschnitt des Fahrradfahrers, der sich im Sensorsichtfeld befindet, wird diese am Oberkörperabschnitt reflektiert und/oder gestreut. Reflektierte und/oder gestreute Messstrahlung, welche auf die Sensorfläche trifft, ist vom Sensormodul detektierbar. Basierend auf der gepulsten und kontrollierten Aussendung von Messstrahlung und der Detektion von gestreuter bzw. reflektierter Messstrahlung ist die Lichtlaufzeit messbar. Basierend auf der gemessenen Lichtlaufzeit ist ein Abstand zum Oberkörperabschnitt ermittelbar. Abstandsinformation kann beispielsweise die Lichtlaufzeit umfassen. Die Messstrahlung kann Infrarotstrahlung sein.

Die Computereinheit ist dazu konfiguriert basierend auf der Abstandsinformation des Sensormoduls die Signalgebereinheit zu veranlassen ein Signal an den Fahrradfahrer auszugeben.

Die Signalgebereinheit kann ein Leuchtmittel, wie beispielsweise eine light-emitting-diode LED, umfassen. Das Leuchtmittel ist durch die Computereinheit so steuerbar, dass durch das Leuchtmittel emittiertes Licht ein optisches an den Fahrradfahrer ausgebbares Signal ist, das der Leistung des Fahrradfahrers zugeordnet ist. D.h. ein solches optisches Signal signalisiert dem Fahrradfahrer seine Leistung.

Die Signalgebereinheit kann einen Schallwandler bzw. Lautsprecher umfassen. Der Schallwandler bzw. Lautsprecher ist durch die Computereinheit so steuerbar, dass durch den Schallwandler bzw. Lautsprecher emittierter Schall ein akustisches an den Fahrradfahrer ausgebbares Signal ist, das der Leistung des Fahrradfahrers zugeordnet ist. D.h. ein solches akustisches Signal signalisiert dem Fahrradfahrer seine Leistung.

Das Sensorsichtfeld ist in einer zur Sensorfläche parallelen Schnittebene entlang einer in der Schnittebene liegenden Längsachse länglich ausgedehnt.

Der Fahrradcomputer ist dazu ausgelegt und konfiguriert mittels der Befestigungsvorrichtung so am Fahrrad befestigt zu werden, dass im befestigten Zustand und mit dem Lenker in Mittelstellung, die Längsachse im Wesentlichen in der Ebene des Fahrradrahmens liegt, sodass Abstandsinformation zu Abständen eines länglichen Oberkörperabschnitts des Fahrradfahrers zum Fahrradcomputer innerhalb des Sensorsichtfelds ermittelbar ist.

In der Mittelstellung ist das lenkbare Vorderrad des Fahrrads gleich ausgerichtet wie das Hinterrad des Fahrrads. D.h. in der Mittelstellung ist der Lenker nicht ausgelenkt und mit dem Lenker in Mittelstellung fährt der Fahrradfahrer geradeaus. In Geradeausfahrt liegen das Vorderrad, das Hinterrad und der Fahrradrahmen im Wesentlichen in derselben Ebene. Ein länglicher Oberkörperabschnitt erstreckt sich beispielsweise von der Brust über den Hals und das Kinn bis hin zur Nase des Fahrradfahrers. Der längliche Oberkörperabschnitt kann sich auch über den Hals und das Kinn bis zur Stirn des Fahrradfahrers erstrecken.

Ein wichtiger Leistungswert bei der Geradeausfahrt betrifft die Position des Oberkörpers des Fahrradfahrers relativ zum Fahrrad. Die Position des Oberkörpers des Fahrradfahrers relativ zum Fahrrad bestimmt massgeblich den Luftwiderstand gegen den angefahren werden muss und auch die Effizienz der Kraftübertragung zum Antreiben der Kurbel. Basierend auf Abstandsinformation zu Abständen eines länglichen Oberkörperabschnitts zum Fahrradcomputer ist durch die Computereinheit ein Leistungswert ermittelbar, der die Überwachung der Position des Oberkörpers des Fahrradfahrers relativ zum Fahrrad und die Ausgabe eines Signals zur Position des Oberkörpers des Fahrradfahrers relativ zum Fahrrad ermöglicht.

Durch die Überwachung und Signalisierung der Position des Oberkörpers des Fahrradfahrers relativ zum Fahrrad wird ermöglicht, dass der Fahrradfahrer während der Fahrt seine Oberkörperposition relativ zum Fahrrad optimieren kann und dadurch effizienter fährt.

Durch die längliche Ausdehnung des Sensorsichtfelds und dadurch, dass durch das Befestigen des Fahrradcomputers am Fahrrad bei Geradausfahrt die Längsachse entlang derer das Sensorsichtfeld länglich ausgedehnt ist im Wesentlichen in der Ebene des Fahrradrahmens liegt, wird erreicht, dass Abstandsinformation zu Abständen eines länglichen Oberkörperabschnitts zum Fahrradcomputer ermittelbar ist und der Einfluss von störender Abstandsinformation zu Abständen störender Oberkörperabschnitte zum Fahrradcomputer minimiert wird. Störende Oberkörperabschnitte können beispielsweise die Arme sein. D.h. die Überwachung und Signalisierung der Oberkörperposition ist durch den Fahrradcomputer effizienter durchführbar.

Es wird somit ein Fahrradcomputer bereitgestellt, der eine verlässliche Überwachung der Position des Oberkörpers relativ zum Fahrrad ermöglicht und der die Position an den Fahrradfahrer während der Fahrt so signalisiert, dass der Fahrradfahrer durch Anpassung seiner Oberkörperposition seine Effizienz während des Fahrradfahrens kontrollieren kann.

Gemäss einer Ausführungsform des Fahrradcomputers ist das Sensorsichtfeld durch einen aktiven Sensorflächenbereich bestimmt und der aktive Sensorflächenbereich ist durch die Computereinheit einstellbar.

Der aktive Sensorflächenbereich ist ein Sensorflächenbereich der Sensorfläche, welcher aktiv ist um Messstrahlung, die auf den aktiven Sensorflächenbereich trifft zu detektieren. Der Fahrradcomputer ist dann dazu konfiguriert, basierend auf der Abstandsinformation, die mittels des aktiven Sensorflächenbereichs erzeugt wird, die Signalgebereinheit zu veranlassen ein Signal an den Fahrradfahrer auszugeben.

Dabei betrifft die Einstellbarkeit des aktiven Sensorflächenbereichs durch die Computereinheit, die Einstellung der Form und Position des aktiven Sensorflächenbereichs auf der Sensorfläche. Durch die Form und Position des aktiven Sensorflächenbereichs auf der Sensorfläche ist auch die Form des Sensorsichtfelds und die Position des Sensorsichtfelds relativ zur Sensorfläche bestimmt. Ein länglicher aktiver Sensorflächenbereich bestimmt ein längliches Sensorsichtfeld. Die Einstellbarkeit des aktiven Sensorflächenbereichs durch die Computereinheit ermöglicht ein aktives Einstellen des Sensorsichtfelds, d.h. die Form des Sensorsichtfelds und die Position des Sensorsichtfelds relativ zur Sensorfläche kann eingestellt werden. Dies ermöglicht, dass Bewegungen des Fahrradcomputers durch das Einstellen des aktiven Sensorflächenbereichs kompensierbar sind, sodass die Längsachse entlang derer das Sensorsichtfeld länglich ausgedehnt ist im Wesentlichen in der Ebene des Fahrradrahmens liegt.

Gemäss einer Ausführungsform des Fahrradcomputers ist in einer Grundeinstellung des Fahrradcomputers der aktive Sensorflächenbereich in 16 gleich grosse Unterbereiche geteilt, die in zwei zur Längsachse parallelen Kolonnen mit jeweils acht gleich grossen Unterbereichen angeordnet sind, sodass die 16 Unterbereiche eine 8x2 Unterbereichsanordnung mit 8 Zeilen und 2 Kolonnen bilden.

Ein so eingestellter aktiver Sensorflächenbereich ermöglicht, dass die Überwachung und Signalisierung der Oberkörperposition durch den Fahrradcomputer effizienter durchführbar sind, weil nur ein Teil der Sensorfläche aktiv ist, d.h. mit Energie versorgt ist und der Einfluss von störender Abstandsinformation zu Abständen störender Oberkörperabschnitte zum Fahrradcomputer minimiert wird.

Gemäss einer Ausführungsform des Fahrradcomputers ist das Sensormodul dazu konfiguriert, dass jeder Unterbereich für sich Abstandsinformation ermittelt, und ist die Computereinheit dazu konfiguriert, in einem ersten Schritt basierend auf der Abstandsinformation von jeweils zwei Unterbereichen derselben Zeile einen jeweiligen Zeilenmittelwert zu bestimmen, in einem zweiten Schritt basierend auf den jeweiligen Zeilenmittelwerten einen Gesamtmittelwert zu bilden, und basierend auf dem Gesamtmittelwert die Signalgebereinheit zu veranlassen ein Signal an den Fahrradfahrer auszugeben.

Dass jeder Unterbereich für sich Abstandsinformation ermittelt bewirkt, dass die Abstandsinformation mit einer räumlichen Auflösung, d.h. den 16 Unterbereichen zugeordnet ermittelbar ist. Dadurch kann die ermittelte Abstandsinformation 16 Bereichen des länglichen Oberkörperabschnitts zugeordnet und auch bereichsabhängig gewichtet werden. Ein Zeilenmittelwert kann beispielsweise gemittelte Abstandsinformation oder ein gemittelter Abstand sein. Dies gilt in analoger Weise auch für den Gesamtmittelwert. Die Überwachung und Signalisierung der Oberkörperposition durch den Fahrradcomputer sind so verlässlicher durchführbar.

Gemäss einer Ausführungsform des Fahrradcomputers ist die Computereinheit dazu konfiguriert im befestigten Zustand, basierend auf der Abstandsinformation den aktiven Sensorflächenbereich so einzustellen, dass das Sensorsichtfeld aktiv und fortlaufend so eingestellt wird, dass die Längsachse im Wesentlichen in der Ebene des Fahrradrahmens liegt.

Dadurch wird erreicht, dass die Überwachung und Signalisierung der Oberkörperposition durch den Fahrradcomputer auch bei Bewegungen der Sensorfläche relativ zur Ebene des Fahrradrahmens verlässlicher durchführbar sind.

Gemäss einer Ausführungsform des Fahrradcomputers wird das Sensorsichtfeld von einem Längswinkel LW und einem Breitwinkel BW aufgespannt, wobei der Längswinkel LW die Ausdehnung des Sensorsichtfelds entlang der Längsachse bestimmt, der Breitwinkel BW die Ausdehnung des Sensorsichtfelds entlang einer Breitachse die quer zur Längsachse verläuft bestimmt, für den Längswinkel LW gilt, dass 40 ≤ LW ≤ 90 Grad, bevorzugt LW = 61 Grad, ist, und für den Breitwinkel BW gilt, dass 5 ≤ BW ≤ 30 Grad, bevorzugt BW = 13.9 Grad, ist.

Ein solches Sensorsichtfeld ermöglicht eine besonders verlässliche und effiziente Überwachung und Signalisierung der Oberkörperposition durch den Fahrradcomputer.

Gemäss einer Ausführungsform des Fahrradcomputers gilt für das Verhältnis Längswinkel zu Breitwinkel VLB, dass 2 ≤ VLB ≤ 8, bevorzugt 4.4 ist.

Ein solches Sensorsichtfeld ermöglicht eine besonders verlässliche und effiziente Überwachung und Signalisierung der Oberkörperposition durch den Fahrradcomputer.

Gemäss einer Ausführungsform des Fahrradcomputers umfasst die Befestigungsvorrichtung einen Magnet, der so an der Befestigungsvorrichtung angeordnet ist, dass der Fahrradcomputer magnetisch am Fahrrad befestigbar ist, und sich der Fahrradcomputer durch die magnetische Befestigung relativ zum Fahrrad selbsttätig so ausrichtet, dass mit dem Lenker in Mittelstellung die Längsachse im Wesentlichen in der Ebene des Fahrradrahmens liegt.

Eine solche Befestigungsvorrichtung ermöglicht ein einfaches Handling des Fahrradcomputers.

Gemäss einer Ausführungsform des Fahrradcomputers umfasst dieser einen Beschleunigungssensor und ist die Computereinheit dazu konfiguriert im befestigten Zustand, basierend auf Sensorinformation des Beschleunigungssensors den aktiven Sensorflächenbereich so einzustellen, dass das Sensorsichtfeld aktiv und fortlaufend so eingestellt wird, dass die Längsachse im Wesentlichen in der Ebene des Fahrradrahmens liegt.

Fortlaufend bedeutet kontinuierlich, d.h. zu Zeitpunkten, welche zeitlich aufeinanderfolgen und zeitlich zueinander beabstandet sind.

Dadurch wird erreicht, dass die Überwachung und Signalisierung der Oberkörperposition durch den Fahrradcomputer auch bei Bewegungen der Sensorfläche relativ zur Ebene des Fahrradrahmens verlässlicher durchführbar sind.

Gemäss einer Ausführungsform des Fahrradcomputers ist dieser dazu ausgelegt und konfiguriert in einem Referenzierungsmodus und in einem Trainingsmodus betrieben zu werden, wobei im Referenzierungsmodus Referenzabstandsinformation zu Abständen eines länglichen Oberkörperabschnitts des Fahrradfahrers zum Fahrradcomputer innerhalb des Sensorsichtfelds ermittelt und abgespeichert wird, und im Trainingsmodus Trainingsabstandsinformation zu Abständen eines länglichen Oberkörperabschnitts des Fahrradfahrers zum Fahrradcomputer innerhalb des Sensorsichtfelds ermittelt wird, basierend darauf ein Abgleichen der Trainingsabstandsinformation mit der Referenzabstandsinformation erfolgt, und die Computereinheit dazu konfiguriert ist, basierend auf dem Abgleichen ein Signal an den Fahrradfahrer auszugeben.

Ein solcher Fahrradcomputer ermöglicht die Aufzeichnung von fahrradfahrerspezifischer Referenzabstandsinformation zu einer Fahrt mit optimaler Oberkörperposition und die Überwachung und Signalisierung der Oberkörperposition durch den Fahrradcomputer an den Fahrradfahrer, sodass dieser während einer Trainingsfahrt seine Oberkörperposition an die optimale Oberkörperposition angleichen kann. Dadurch wird ein Fahrradcomputer bereitgestellt, der auf verlässliche Weise die Oberkörperposition überwacht und so an den Fahrradfahrer signalisiert, dass dieser einfach seine Oberkörperposition an die optimale Oberkörperposition angleichen kann.

Gemäss einer Ausführungsform des Fahrradcomputers ist die Computereinheit dazu konfiguriert, basierend auf ermittelter Abstandsinformation zu einem Abstand der einen Schwellenwert unterschreitet oder basierend auf einer Betätigung eines Druckschalters des Fahrradcomputers vom Betrieb des Fahrradcomputers im Referenzierungsmodus zum Betrieb des Fahrradcomputers im Trainingsmodus und umgekehrt zu wechseln und/oder ist die Computereinheit dazu konfiguriert im Referenzierungsmodus einen Referenzzeitraum, während dem die Referenzabstandsinformation ermittelt und abgespeichert wird, basierend auf ermittelter Abstandsinformation zu einem Abstand (6) der einen Schwellenwert unterschreitet oder basierend auf einer Betätigung eines Druckschalters des Fahrradcomputers (1) zu bestimmen.

Beispielsweise kann das Abdecken der Sensorfläche durch eine Hand des Fahrradfahrers in einem Abstand zur Sensorfläche der einen Schwellenwert unterschreitet oder das Drücken des Druckschalters den Wechsel des Betriebsmodus bewirken. Beispielsweise kann das Abdecken der Sensorfläche durch eine Hand des Fahrradfahrers in einem Abstand zur Sensorfläche der einen Schwellenwert unterschreitet oder das Drücken des Druckschalters das Bestimmen des Startzeitpunkts und/oder des Endzeitpunkts des Referenzzeitraums bewirken. Der Schwellenwert kann beispielsweise 1 cm, 5 cm oder ein Wert dazwischen betragen. Dadurch wird eine einfache Bedienbarkeit des Fahrradcomputers ermöglicht.

Die Erfindung betrifft auch ein Trainingssystem umfassend ein Fahrrad und einen Fahrradcomputer gemäss einer der hierin beschriebenen Ausführungsformen, wobei der Fahrradcomputer am Fahrrad, insbesondere am Lenker, so befestigt ist, dass mit dem Lenker in Mittelstellung die Längsachse im Wesentlichen in der Ebene des Fahrradrahmens liegt.

Die Erfindung betrifft auch ein Trainingsverfahren umfassend die Schritte Fahrradfahren mit einem Fahrrad an dem ein Fahrradcomputer befestigt ist, der dazu ausgelegt und konfiguriert ist Abstandsinformation zu Abständen innerhalb eines Sensorsichtfelds, insbesondere basierend auf dem Prinzip der Lichtlaufzeitmessung, zu ermitteln, durch den Fahrradcomputer in einem Referenzierungsmodus während des Fahrradfahrens fortlaufendes Ermitteln und Abspeichern von Referenzabstandsinformation zu Abständen eines länglichen Oberkörperabschnitts eines Fahrradfahrers zum Fahrradcomputer während eines Referenzzeitraums, Ermitteln eines Referenzwerts basierend auf der während des Referenzzeitraums ermittelten und abgespeicherten Referenzabstandsinformation, und in einem Trainingsmodus während des Fahrradfahrens fortlaufendes Ermitteln und Abspeichern von Trainingsabstandsinformation zu Abständen des länglichen Oberkörperabschnitts des Fahrradfahrers zum Fahrradcomputer und basierend darauf fortlaufendes Ermitteln eines Trainingswerts, fortlaufendes Abgleichen des Trainingswerts mit dem Referenzwert, fortlaufendes Ausgeben eines Signals an den Fahrradfahrer basierend auf dem Abgleichen, wobei das Abgleichen folgende Schritte umfasst Bestimmen einer Abweichung des Trainingswerts vom Referenzwert, Prüfen, ob die Abweichung ein erstes Schwellenwertkriterium erfüllt, und/oder Prüfen, ob innerhalb eines bestimmten Zeitintervalls bestimmte Abweichungen des Trainingswerts vom Referenzwert mehrheitlich ein zweites Schwellenwertkriterium erfüllen, das Ausgeben folgende Schritte umfasst falls die Abweichung das erste Schwellenwertkriterium erfüllt, Ausgeben eines dem ersten Schwellenwertkriterium zuordenbares optisches Signal an den Fahrradfahrer, und/oder falls innerhalb des bestimmten Zeitintervalls bestimmte Abweichungen des Trainingswerts vom Referenzwert mehrheitlich das zweite Schwellenwertkriterium erfüllen, Ausgeben eines akustischen Signals an den Fahrradfahrer, und für eine bestimmte Zeitdauer Pausieren der Ausgabe eines akustischen Signals, und Pausieren des Prüfens, ob innerhalb des bestimmten Zeitintervalls bestimmte Abweichungen des Trainingswerts vom Referenzwert mehrheitlich das zweite Schwellenwertkriterium erfüllen.

Der Referenzwert kann beispielsweise ein Abstandswert sein oder ein Zahlenwert einer Zahlenskala, die durch einen minimalen und einen maximalen Zahlenwert bestimmt ist. Das Analoge gilt für den Trainingswert. Der Referenzzeitraum ist durch eine Zeitdauer bestimmt, beispielsweise 5 Minuten oder 10 Minuten.

Der Schwellenwert eines Schwellenwertkriteriums basiert beispielsweise auf dem Referenzwert. Das Kriterium betrifft das Überschreiten bzw. das Unterschreiten des Schwellenwerts.

Dadurch wird eine Trainingsverfahren bereitgestellt, welche ein effizientes Training ermöglicht.

Gemäss einer Ausführungsform des Trainingsverfahrens umfasst dieses den Schritt Wechseln vom Referenzierungsmodus zum Trainingsmodus durch Drücken eines Druckschalters des Fahrradcomputers oder basierend auf einem Eindringen in das Sensorsichtfeld in einem Abstand zum Fahrradcomputer der geringer ist als ein bestimmter Schwellenwert.

Gemäss einer Ausführungsform des Trainingsverfahrens umfasst dieses den Schritt Bestimmen des Referenzzeitraums basierend auf einem Drücken eines Druckschalters des Fahrradcomputers und/oder einem Eindringen in das Sensorsichtfeld in einem Abstand zum Fahrradcomputer der geringer ist als ein bestimmter Schwellenwert.

Gemäss einer Ausführungsform des Trainingsverfahrens ist der Fahrradcomputer ein Fahrradcomputer gemäss einer der hierin beschriebenen Ausführungsformen.

Die Erfindung betrifft auch einen Fahrradcomputer der dazu ausgelegt und konfiguriert ist ein Trainingsverfahren gemäss einer der hierin beschriebenen Ausführungsformen auszuführen.

Gemäss einer Ausführungsform des Fahrradcomputers ist dieser ein Fahrradcomputer zur Durchführung des Trainingsverfahrens gemäss einer der hierin beschriebenen Ausführungsformen.

Der erfindungsgemässe Fahrradcomputer und das erfindungsgemässe Trainingssystem sind im Folgenden rein beispielhaft anhand konkreter in den Figuren dargestellter Ausführungsformen näher beschrieben. Es zeigen:
- Figur 1: zeigt ein Fahrradfahrer mit einem Fahrrad und einem am Fahrrad befestigten Fahrradcomputer;
- Figur 2: zeigt einen Fahrradcomputer in einer Ansicht von oben;
- Figur 3: zeigt ein Sensormodul;
- Figur 4: zeigt die Sensorfläche des Sensormoduls von Figur 4;
- Figur 5: zeigt ein Sensormodul mit dem Sensorsichtfeld; und
- Figur 6: zeigt das Sensorsichtfeld der Figur 5: links in einer Schnittdarstellung, wobei die Schnittebene quer zur Breitachse 13 verläuft, und rechts in einer Schnittdarstellung, wobei die Schnittebene quer zur Längsachse 8 verläuft.

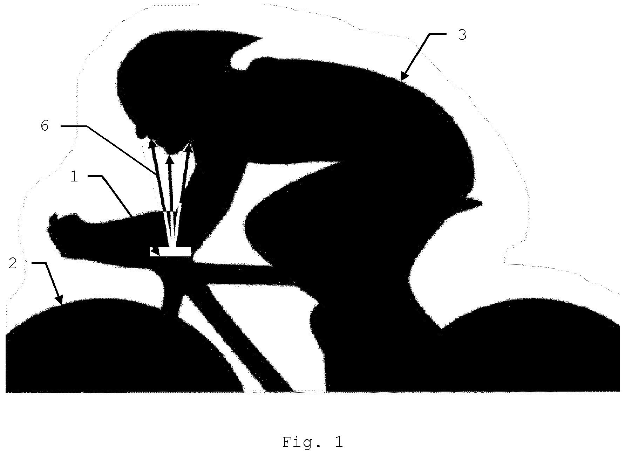

**Figur 1** zeigt einen Fahrradfahrer 3 beim Fahrradfahren mit einem Trainingssystem umfassend ein Fahrrad 2 und einen Fahrradcomputer 1. Der Fahrradcomputer ist mittels der Befestigungsvorrichtung am Lenker des Fahrrads 2 befestigt. Der Fahrradcomputer 1 ist dazu ausgelegt unter anderem die Oberkörperposition des Fahrradfahrers 3 relativ zum Fahrradcomputer 1 zu überwachen und dem Fahrradfahrer 3 während des Fahrens ein Feedback in Form eines optischen und/oder akustischen Signals zur Oberkörperposition auszugeben.

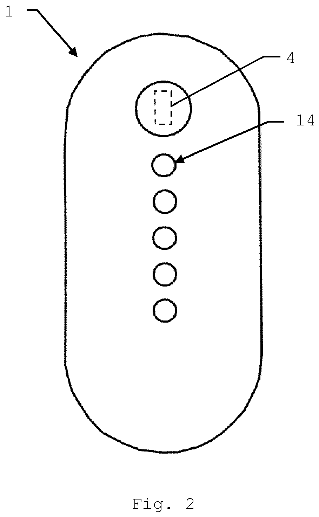

Der Fahrradcomputer umfasst eine Computereinheit und ein Sensormodul 4, gemäss den Figuren 2 bis 6, mit einer Sensorfläche 5. Das Sensormodul ist dazu konfiguriert innerhalb des Sensorsichtfelds 7, Abstandsinformation zu den Abständen 6 basierend auf dem Prinzip der Lichtlaufzeitmessung zu ermitteln.

Die Computereinheit ist des Weiteren dazu konfiguriert basierend auf dieser Abstandsinformation die interne Signalgebereinheit zu veranlassen das optische/und oder akustische Signal an den Fahrradfahrer 3 auszugeben.

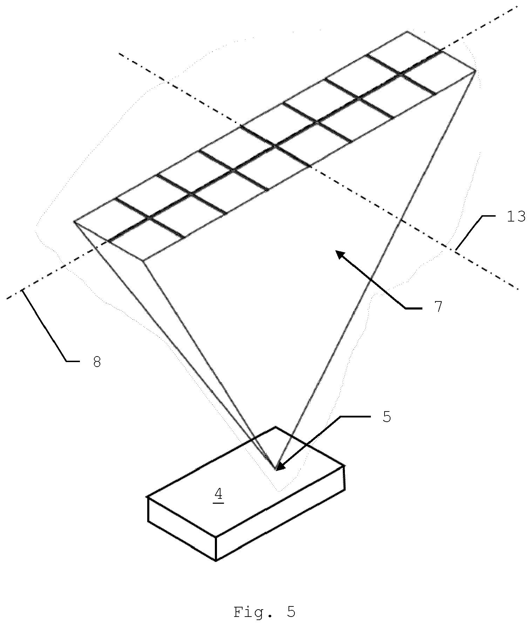

Wie in der Figur 5 gezeigt ist das Sensorsichtfeld 7 in einer zur Sensorfläche 5 parallelen Schnittebene entlang einer in der Schnittebene liegenden Längsachse 8 länglich ausgedehnt.

Der Fahrradcomputer 1 ist mittels der Befestigungsvorrichtung so am Fahrrad 2 befestigt, dass mit dem Lenker in Mittelstellung, die Längsachse 8 im Wesentlichen in der Ebene des Fahrradrahmens liegt. Dadurch ist Abstandsinformation zu den Abständen 6 des länglichen Oberkörperabschnitts des Fahrradfahrers 3 zum Fahrradcomputer 1 ermittelbar.

**Figur 2** zeigt einen Fahrradcomputer 1 in einer Ansicht von oben. Das Sensormodul 4 ist im Fahrradcomputer integriert. Der Fahrradcomputer umfasst einen Lautsprecher zur Ausgabe eines akustischen Signals, beispielsweise eines Tons, und fünf LEDs 14 in einer Reihe.

Der Lautsprecher ist von der Computereinheit so steuerbar, dass der Lautsprecher dem Fahrradfahrer 3 basierend auf Abstandsinformation durch Aussenden eines Tons signalisiert, dass sich seine Oberkörperposition von der anzustrebenden Oberkörperposition abweicht.

Die LEDs sind von der Computereinheit so steuerbar, dass Sie dem Fahrradfahrer 3 die Oberkörperposition relativ zum Fahrradcomputer während des Fahrens optisch signalisieren. Die Computereinheit kann dazu konfiguriert sein die LEDs so anzusteuern, dass die LEDs dem Fahrradfahrer 3 basierend auf Abstandsinformation durch Blinken signalisieren, dass sich seine Oberkörperposition von der anzustrebenden Oberkörperposition abweicht. Dabei kann jeder LED ein Abweichungsbereich zugeordnet sein, sodass je nach Stärke der Abweichung jeweils nur eine der LEDs blinkt. Dem Fahrradfahrer wird so ermöglicht, dass er mittels der von den LEDs ausgesendeten optischen Signale seine Oberkörperposition relativ zum Fahrradcomputer so anpasst, dass diese der angestrebten Oberkörperposition entspricht. Dabei ist die angestrebte Oberkörperposition eine Oberkörperposition, bei der der Luftwiderstand gegen den angefahren werden muss minimiert ist und die Effizienz der Kraftübertragung zum Antreiben der Kurbel optimiert ist.

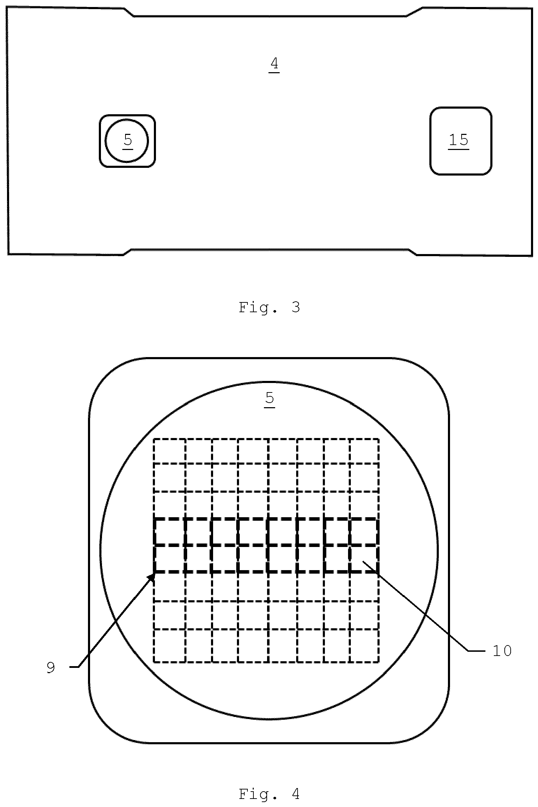

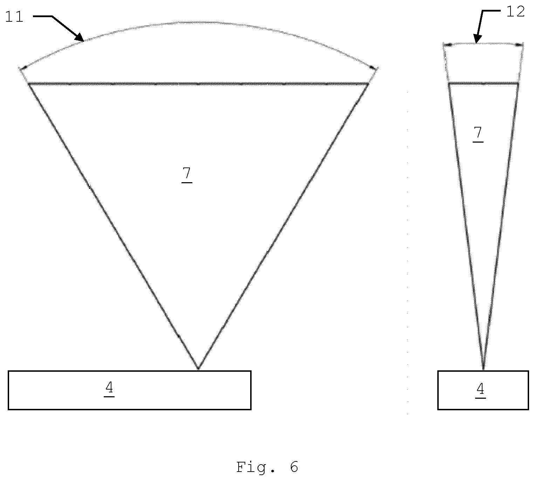

**Figur 3** zeigt ein Sensormodul 4 in einer Ansicht auf die Sensorfläche 5. Die Lichtquelle 15 sendet Messstrahlung zur Ermittlung von Abstandsinformation zu Abständen 6 innerhalb des Sensorsichtfelds 7, wie in den Figuren 5 und 6 gezeigt, aus.

**Figur 4** zeigt die Sensorfläche 5 eines Sensormoduls 4, wie in der Figur 3 gezeigt. Das Sensorsichtfeld 7, wie in den Figuren 5 und 6 gezeigt, ist durch den aktiven Sensorflächenbereich 9 bestimmt. In einer Grundeinstellung des Fahrradcomputers ist der aktive Sensorflächenbereich 9 in die 16 gleich grossen Unterbereiche 10 geteilt, die in zwei zur Längsachse 8, wie in der Figur 5 gezeigt, parallelen Kolonnen mit jeweils acht gleich grossen Unterbereichen 10 angeordnet sind. Die 16 Unterbereiche 10 bilden eine 8x2 Unterbereichsanordnung mit 8 Zeilen und 2 Kolonnen.

Das Sensormodul 4 ist dazu konfiguriert, dass jeder Unterbereich 10 für sich Abstandsinformation ermittelt. Dass jeder Unterbereich für sich Abstandsinformation ermittelt bedeutet, dass die Abstandsinformation mit einer räumlichen Auflösung ermittelbar ist. Die Computereinheit ist dazu konfiguriert in einem ersten Schritt basierend auf der Abstandsinformation von jeweils zwei Unterbereichen 10 derselben Zeile einen jeweiligen Zeilenmittelwert zu bestimmen. Des Weiteren ist die Computereinheit dazu konfiguriert in einem zweiten Schritt basierend auf den jeweiligen Zeilenmittelwerten einen Gesamtmittelwert zu bilden, und basierend auf dem Gesamtmittelwert die Signalgebereinheit zu veranlassen ein Signal an den Fahrradfahrer 3 auszugeben. Dadurch kann Abstandsinformation zu Abständen 6 von unterschiedlichen Orten eines länglichen Oberkörperabschnitts zum Fahrradcomputer ermittelt werden.

Die Computereinheit kann dazu konfiguriert sein - mit dem Fahrradcomputer im befestigten Zustand - basierend auf der Abstandsinformation den aktiven Sensorflächenbereich 9 so einzustellen und anzupassen, dass das Sensorsichtfeld 7 aktiv und fortlaufend so eingestellt und ausgerichtet wird, dass die Längsachse 8 im Wesentlichen in der Ebene des Fahrradrahmens liegt bzw. in der Ebene des Fahrradrahmens liegend gehalten wird.

**Figuren 5** **und** **6** zeigen das Sensorsichtfeld 7 eines Sensormoduls 4, wie in der Figur 3 gezeigt. Das Sensorsichtfeld 7 wird von einem Längswinkel LW 11 und einem Breitwinkel BW 12 aufgespannt. Der Längswinkel LW 11, bestimmt die Ausdehnung des Sensorsichtfelds 7 entlang der Längsachse 8. Der Breitwinkel BW 12 bestimmt die Ausdehnung des Sensorsichtfelds 7 entlang einer Breitachse 13, die quer zur Längsachse 8 verläuft. Für den Längswinkel LW 11 gilt, dass LW = 61 Grad ist. Für den Breitwinkel BW 12 gilt, dass BW = 13.9 Grad ist. Für das Verhältnis Längswinkel 11 zu Breitwinkel 12 VLB gilt, dass VLB = 4.4 ist.

Mit einem Fahrradcomputer 1 der dazu ausgelegt und konfiguriert ist Abstandsinformation zu Abständen 6 innerhalb eines Sensorsichtfelds 7, beispielsweise basierend auf dem Prinzip der Lichtlaufzeitmessung, zu ermitteln, lässt sich ein Trainingsverfahren durchführen. Dieses Trainingsverfahren umfasst folgende Schritte:
Fahrradfahren mit einem Fahrrad 2 an dem ein solcher Fahrradcomputer befestigt ist.
Durch den Fahrradcomputer 1 in einem Referenzierungsmodus: Während des Fahrradfahrens fortlaufendes Ermitteln und Abspeichern von Referenzabstandsinformation zu Abständen 6 eines länglichen Oberkörperabschnitts eines Fahrradfahrers 3 zum Fahrradcomputer 1 während eines Referenzzeitraums.
Ermitteln eines Referenzwerts basierend auf der während des Referenzzeitraums ermittelten und abgespeicherten Referenzabstandsinformation.
In einem Trainingsmodus: Während des Fahrradfahrens fortlaufendes Ermitteln und Abspeichern von Trainingsabstandsinformation zu Abständen 6 des länglichen Oberkörperabschnitts des Fahrradfahrers zum Fahrradcomputer 1 und basierend darauf fortlaufendes Ermitteln eines Trainingswerts.
Fortlaufendes Abgleichen des Trainingswerts mit dem Referenzwert.
Fortlaufendes Ausgeben eines Signals an den Fahrradfahrer 3 basierend auf dem Abgleichen.
Das Abgleichen umfasst folgende Schritte:
   Bestimmen einer Abweichung des Trainingswerts vom Referenzwert.
   Prüfen, ob die Abweichung ein erstes Schwellenwertkriterium erfüllt, und/oder
   Prüfen, ob innerhalb eines bestimmten Zeitintervalls bestimmte Abweichungen des Trainingswerts vom Referenzwert mehrheitlich ein zweites Schwellenwertkriterium erfüllen.
Das Ausgeben umfasst folgende Schritte:
   Falls die Abweichung das erste Schwellenwertkriterium erfüllt, Ausgeben eines dem ersten Schwellenwertkriterium zuordenbares optisches Signal an den Fahrradfahrer 3, und/oder
   Falls innerhalb des bestimmten Zeitintervalls bestimmte Abweichungen des Trainingswerts vom Referenzwert mehrheitlich das zweite Schwellenwertkriterium erfüllen:
      Ausgeben eines akustischen Signals an den Fahrradfahrer 3.
   Für eine bestimmte Zeitdauer:
      Pausieren der Ausgabe eines akustischen Signals.
      Pausieren des Prüfens, ob innerhalb des bestimmten Zeitintervalls bestimmte Abweichungen des Trainingswerts vom Referenzwert mehrheitlich das zweite Schwellenwertkriterium erfüllen.
Das Trainingsverfahren kann auch die Schritte umfassen:
   Wechseln vom Referenzierungsmodus zum Trainingsmodus durch Drücken eines Druckschalters des Fahrradcomputers 1 oder basierend auf einem Eindringen in das Sensorsichtfeld 7 in einem Abstand 6 zum Fahrradcomputer 1 der geringer ist als ein bestimmter Schwellenwert.
   Bestimmen des Referenzzeitraums basierend auf einem Drücken eines Druckschalters des Fahrradcomputers 1 und/oder einem Eindringen in das Sensorsichtfeld 7 in einem Abstand 6 zum Fahrradcomputer 1 der geringer ist als ein bestimmter Schwellenwert.

## Patentansprüche

1. Fahrradcomputer (1) zur Befestigung an einem Fahrrad (2), der dazu ausgelegt ist die Leistung eines Fahrradfahrers (3) zu überwachen und ein Signal zur Leistung an den Fahrradfahrer (3) auszugeben, mit
einer Befestigungsvorrichtung,
einer Computereinheit,
einem Sensormodul (4) mit einer Sensorfläche (5), das dazu konfiguriert ist, Abstandsinformation zu Abständen (6) innerhalb eines Sensorsichtfelds (7) basierend auf dem Prinzip der Lichtlaufzeitmessung zu ermitteln, einer Signalgebereinheit, und
einem Datenspeicher,
wobei
die Computereinheit dazu konfiguriert ist basierend auf der Abstandsinformation des Sensormoduls (4) die Signalgebereinheit zu veranlassen ein Signal an den Fahrradfahrer (3) auszugeben,
**dadurch gekennzeichnet, dass**
das Sensorsichtfeld (7) in einer zur Sensorfläche (5) parallelen Schnittebene entlang einer in der Schnittebene liegenden Längsachse (8) länglich ausgedehnt ist, und
der Fahrradcomputer (1) dazu ausgelegt und konfiguriert ist mittels der Befestigungsvorrichtung so am Fahrrad (2) befestigt zu werden, dass im befestigten Zustand und mit dem Lenker in Mittelstellung, die Längsachse (8) im Wesentlichen in der Ebene des Fahrradrahmens liegt, sodass Abstandsinformation zu Abständen (6) eines länglichen Oberkörperabschnitts des Fahrradfahrers (3) zum Fahrradcomputer (1) innerhalb des Sensorsichtfelds (7) ermittelbar ist.

2. Fahrradcomputer (1) nach Anspruch 1, wobei das Sensorsichtfeld (7) durch einen aktiven Sensorflächenbereich (9) bestimmt ist und der aktive Sensorflächenbereich (9) durch die Computereinheit einstellbar ist.

3. Fahrradcomputer (1) nach Anspruch 2, wobei in einer Grundeinstellung des Fahrradcomputers der aktive Sensorflächenbereich (9) in 16 gleich grosse Unterbereiche (10) geteilt ist, die in zwei zur Längsachse (8) parallelen Kolonnen mit jeweils acht gleich grossen Unterbereichen (10) angeordnet sind, sodass die 16 Unterbereiche (10) eine 8x2 Unterbereichsanordnung mit 8 Zeilen und 2 Kolonnen bilden.

4. Fahrradcomputer (1) nach Anspruch 3, wobei das Sensormodul (4) dazu konfiguriert ist, dass jeder Unterbereich (10) für sich Abstandsinformation ermittelt, und
die Computereinheit dazu konfiguriert ist,
in einem ersten Schritt basierend auf der Abstandsinformation von jeweils zwei Unterbereichen (10) derselben Zeile einen jeweiligen Zeilenmittelwert zu bestimmen,
in einem zweiten Schritt basierend auf den jeweiligen Zeilenmittelwerten einen Gesamtmittelwert zu bilden, und
basierend auf dem Gesamtmittelwert die Signalgebereinheit zu veranlassen ein Signal an den Fahrradfahrer (3) auszugeben.

5. Fahrradcomputer (1) nach einem der Ansprüche 2 bis 4, wobei die Computereinheit dazu konfiguriert ist im befestigten Zustand, basierend auf der Abstandsinformation den aktiven Sensorflächenbereich (9) so einzustellen, dass das Sensorsichtfeld (7) aktiv und fortlaufend so eingestellt wird, dass die Längsachse (8) im Wesentlichen in der Ebene des Fahrradrahmens liegt.

6. Fahrradcomputer (1) nach einem der Ansprüche 1 bis 5, wobei das Sensorsichtfeld (7) von einem Längswinkel LW (11) und einem Breitwinkel BW (12) aufgespannt wird, wobei
der Längswinkel LW (11) die Ausdehnung des Sensorsichtfelds (7) entlang der Längsachse (8) bestimmt,
der Breitwinkel BW (12) die Ausdehnung des Sensorsichtfelds (7) entlang einer Breitachse (13), die quer zur Längsachse (8) verläuft, bestimmt,
für den Längswinkel LW (11) gilt, dass 40 ≤ LW ≤ 90 Grad, bevorzugt LW = 61 Grad, ist, und
für den Breitwinkel BW (12) gilt, dass 5 ≤ BW ≤ 30 Grad, bevorzugt BW = 13.9 Grad, ist.

7. Fahrradcomputer (1) nach Anspruch 6, wobei für das Verhältnis Längswinkel (11) zu Breitwinkel (12) VLB gilt, dass 2 ≤ VLB ≤ 8, bevorzugt 4.4 ist.

8. Fahrradcomputer (1) nach einem der Ansprüche 1 bis 7, wobei die Befestigungsvorrichtung einen Magnet umfasst, der so an der Befestigungsvorrichtung angeordnet ist, dass
der Fahrradcomputer (1) magnetisch am Fahrrad befestigbar ist, und
sich der Fahrradcomputer (1) durch die magnetische Befestigung relativ zum Fahrrad (2) selbsttätig so ausrichtet, dass mit dem Lenker in Mittelstellung die Längsachse (8) im Wesentlichen in der Ebene des Fahrradrahmens liegt.

9. Fahrradcomputer (1) nach einem der Ansprüche 1 bis 8, wobei der Fahrradcomputer (1) einen Beschleunigungssensor umfasst und die Computereinheit dazu konfiguriert ist im befestigten Zustand, basierend auf Sensorinformation des Beschleunigungssensors den aktiven Sensorflächenbereich (9) so einzustellen, dass das Sensorsichtfeld (7) aktiv und fortlaufend so eingestellt wird, dass die Längsachse (8) im Wesentlichen in der Ebene des Fahrradrahmens liegt.

10. Fahrradcomputer (1) nach einem der Ansprüche 1 bis 9, wobei der Fahrradcomputer (1) dazu ausgelegt und konfiguriert ist in einem Referenzierungsmodus und in einem Trainingsmodus betrieben zu werden, wobei
im Referenzierungsmodus Referenzabstandsinformation zu Abständen (6) eines länglichen Oberkörperabschnitts des Fahrradfahrers (3) zum Fahrradcomputer (1) innerhalb des Sensorsichtfelds (7) ermittelt und abgespeichert wird, und
im Trainingsmodus
Trainingsabstandsinformation zu Abständen (6) eines länglichen Oberkörperabschnitts des Fahrradfahrers (3) zum Fahrradcomputer (1) innerhalb des Sensorsichtfelds (7) ermittelt wird,
basierend darauf ein Abgleichen der Trainingsabstandsinformation mit der Referenzabstandsinformation erfolgt, und
die Computereinheit dazu konfiguriert ist, basierend auf dem Abgleichen ein Signal an den Fahrradfahrer (3) auszugeben.

11. Fahrradcomputer (1) nach Anspruch 10, wobei die Computereinheit dazu konfiguriert ist, basierend auf ermittelter Abstandsinformation zu einem Abstand (6) der einen Schwellenwert unterschreitet oder basierend auf einer Betätigung eines Druckschalters des Fahrradcomputers (1) vom Betrieb des Fahrradcomputers (1) im Referenzierungsmodus zum Betrieb des Fahrradcomputers (1) im Trainingsmodus und umgekehrt zu wechseln
und/oder
wobei die Computereinheit dazu konfiguriert ist im Referenzierungsmodus einen Referenzzeitraum, während dem die Referenzabstandsinformation ermittelt und abgespeichert wird, basierend auf ermittelter Abstandsinformation zu einem Abstand (6) der einen Schwellenwert unterschreitet oder basierend auf einer Betätigung eines Druckschalters des Fahrradcomputers (1) zu bestimmen.

12. Trainingssystem umfassend ein Fahrrad (2) und einen Fahrradcomputer (1) nach einem der Ansprüche 1 bis 11, wobei der Fahrradcomputer (1) am Fahrrad (2), insbesondere am Lenker, so befestigt ist, dass mit dem Lenker in Mittelstellung die Längsachse (8) im Wesentlichen in der Ebene des Fahrradrahmens liegt.

13. Trainingsverfahren umfassend die Schritte
Fahrradfahren mit einem Fahrrad (2) an dem ein Fahrradcomputer (1) befestigt ist, der dazu ausgelegt und konfiguriert ist Abstandsinformation zu Abständen (6) innerhalb eines Sensorsichtfelds (7), insbesondere basierend auf dem Prinzip der Lichtlaufzeitmessung, zu ermitteln,
durch den Fahrradcomputer (1)
in einem Referenzierungsmodus während des Fahrradfahrens fortlaufendes Ermitteln und Abspeichern von Referenzabstandsinformation zu Abständen (6) eines länglichen Oberkörperabschnitts eines Fahrradfahrers (3) zum Fahrradcomputer (1) während eines Referenzzeitraums,
Ermitteln eines Referenzwerts basierend auf der während des Referenzzeitraums ermittelten und abgespeicherten Referenzabstandsinformation, und
in einem Trainingsmodus während des Fahrradfahrens
fortlaufendes Ermitteln und Abspeichern von Trainingsabstandsinformation zu Abständen (6) des länglichen Oberkörperabschnitts des Fahrradfahrers zum Fahrradcomputer (1) und basierend darauf fortlaufendes Ermitteln eines Trainingswerts,
fortlaufendes Abgleichen des Trainingswerts mit dem Referenzwert,
fortlaufendes Ausgeben eines Signals an den Fahrradfahrer (3) basierend auf dem Abgleichen,
wobei
das Abgleichen folgende Schritte umfasst
Bestimmen einer Abweichung des Trainingswerts vom Referenzwert,
Prüfen, ob die Abweichung ein erstes Schwellenwertkriterium erfüllt, und/oder
Prüfen, ob innerhalb eines bestimmten Zeitintervalls bestimmte Abweichungen des Trainingswerts vom Referenzwert mehrheitlich ein zweites Schwellenwertkriterium erfüllen,
das Ausgeben folgende Schritte umfasst
falls die Abweichung das erste Schwellenwertkriterium erfüllt, Ausgeben eines dem ersten Schwellenwertkriterium zuordenbares optisches Signal an den Fahrradfahrer (3), und/oder
falls innerhalb des bestimmten Zeitintervalls bestimmte Abweichungen des Trainingswerts vom Referenzwert mehrheitlich das zweite Schwellenwertkriterium erfüllen,
Ausgeben eines akustischen Signals an den Fahrradfahrer (3), und
für eine bestimmte Zeitdauer
Pausieren der Ausgabe eines akustischen Signals, und
Pausieren des Prüfens, ob innerhalb des bestimmten Zeitintervalls bestimmte Abweichungen des Trainingswerts vom Referenzwert mehrheitlich das zweite Schwellenwertkriterium erfüllen.

14. Trainingsverfahren nach Anspruch 13, umfassend den Schritt Wechseln vom Referenzierungsmodus zum Trainingsmodus durch Drücken eines Druckschalters des Fahrradcomputers (1) oder basierend auf einem Eindringen in das Sensorsichtfeld (7) in einem Abstand (6) zum Fahrradcomputer (1) der geringer ist als ein bestimmter Schwellenwert .

15. Trainingsverfahren nach einem der Ansprüche 13 oder 14, umfassend den Schritt Bestimmen des Referenzzeitraums basierend auf einem Drücken eines Druckschalters des Fahrradcomputers (1) und/oder einem Eindringen in das Sensorsichtfeld (7) in einem Abstand (6) zum Fahrradcomputer (1) der geringer ist als ein bestimmter Schwellenwert
und/oder
wobei der Fahrradcomputer (1) ein Fahrradcomputer (1) nach einem der Ansprüche 1 bis 11 ist.

16. Fahrradcomputer (1) der dazu ausgelegt und konfiguriert ist ein Trainingsverfahren nach einem der Ansprüche 13 bis 15 auszuführen.
